(19) Europäisches Patentamt
European Patent Office
Office européen des brevets

(11) **EP 3 152 993 B1**

(12) **EUROPÄISCHE PATENTSCHRIFT**

(45) Veröffentlichungstag und Bekanntmachung des Hinweises auf die Patenterteilung:
**11.04.2018 Patentblatt 2018/15**

(51) Int Cl.:
***A01C 17/00*** *(2006.01)*

(21) Anmeldenummer: **16401060.5**

(22) Anmeldetag: **12.09.2016**

(54) **VERFAHREN ZUR ABWURFWINKELREGELUNG EINES SCHLEUDERSTREUERS**

METHOD FOR CONTROLLING THE LAUNCH ANGLE OF A CENTRIFUGAL DISTRIBUTOR

PROCÉDÉ DE RÉGULATION D'ANGLE DE DÉVERSEMENT D'UN ÉPANDEUR D'ENGRAIS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **06.10.2015 DE 102015116945**

(43) Veröffentlichungstag der Anmeldung:
**12.04.2017 Patentblatt 2017/15**

(73) Patentinhaber: **Amazonen-Werke H. Dreyer GmbH & Co. KG 49205 Hasbergen (DE)**

(72) Erfinder: **Rahe, Florian 49504 Lotte (DE)**

(56) Entgegenhaltungen:
EP-A1- 1 068 784          EP-A1- 3 017 678
DE-A1- 19 723 359     DE-A1-102012 111 144

**Beschreibung**

Die Erfindung betrifft ein Verfahren zur Abwurfwinkelregelung eines Schleuderstreuers mit einer ersten und zweiten Streuscheibe und mit zugeordneten Einleitsystemen für Dünger, sowie einen entsprechend ausgebildeten Schleuderstreuer.

Wie die DE 197 23 359 A1 offenbart, eigenen sich für den Austrag von Dünger auf landwirtschaftlichen Anbauflächen Schleuderstreuer, insbesondere solche mit zwei nebeneinander angeordneten und gegenläufig angetriebenen Streuscheiben. Hierbei wird der Dünger in Abhängigkeit vom Streuscheibentyp und der Düngersorte in Form eines charakteristischen Streufächers oder Streubilds durch Anschlussfahren über eine vorgegebene Arbeitsbreite verteilt.

Ferner offenbaren DE 10 2012 111144 A1 und EP 1 068 784 A1 ebenfalls Verfahren zur Abwurfwinkelsteuerung eines Schleuderstreuers. Als Parameter zur Charakterisierung von Streubildern einer Streuscheibe eignen sich insbesondere die mittlere Wurfweite WW und der mittlere Abwurfwinkel AWW des Düngeraustrags. Diese Werte werden für verschiedene Arbeitsbreiten AB und für unterschiedliche Düngersorten in Streutabellen bereitgestellt und können für eine gewünschte Arbeitsbreite an einer Bedienstation zu Beginn des Arbeitsbetriebs eingegeben werden. Die mittleren Abwurfwinkel AWW und Wurfweiten WW werden beispielsweise als 50%-Perzentil einer in Umfangsrichtung zum Mittelpunkt der Streuscheibe gemessenen Abwurfwinkelverteilung beziehungsweise einer radial von der Streuscheibe aus definierten Wurfweiteverteilung des Streubilds ermittelt. Weitere gebräuchliche Parameter sind der Anfangswert AWWa der Abwurfwinkelverteilung als 5%-Perzentil und der zugehörige Endwert AWWe als 95%-Perzentil, ebenso ein Anfangswert WWa der Wurfweiteverteilung als 5%-Perzentil und ein Endwert WWe als 95%-Perzentil. Diese charakteristischen Parameter von Streubildern werden beispielsweise unter reproduzierbaren Bedingungen durch Schalenversuche in Streuhallen für einzelne Düngersorten in Abhängigkeit vom Streuscheibentyp, der Drehzahl und unterschiedlichen Stellungen eines an der Streuscheibe ausgebildeten Einleitsystems für Dünger ermittelt. Die für bestimmte Arbeitsbreiten und Düngersorten unter Standardbedingungen einzustellenden Stellungen und Drehzahlen werden dann üblicherweise in Streutabellen aufgelistet.

Nachteilig ist jedoch, dass sich insbesondere die Oberflächeneigenschaften von Dünger in Abhängigkeit von Lagerbedingungen, wie beispielsweise der Luftfeuchte oder dergleichen, ändern. Insbesondere das Reibverhalten der Düngerkörner wirkt sich entscheidend auf die Abwurfwinkelverteilung aus. Ebenso können sich einzelne Düngerchargen unterscheiden, beispielsweise hinsichtlich der Korngröße, die direkten Einfluss auf die erzielte Wurfweiteverteilung hat. Daher kann die Anwendung der unter standardisierten Bedingungen ermittelten Streuparameter im konkreten Anwendungsfall zu unbefriedigenden Ergebnissen führen.

Es wurden daher bereits Anstrengungen unternommen, Streufächer bzw. Ist-Streubilder beim Düngeraustrag zu kontrollieren und gegebenenfalls an ein Soll-Streubild anzugleichen. Hierzu ist es beispielsweise aus der EP 2 783 560 A2 bekannt, an jeder Streuscheibe über deren nutzbaren Abwurfwinkelbereich Radarsensoren zu verteilen, die Radarkeulen aussenden und im nutzbaren Abwurfwinkelbereich Information über eine Ist-Abwurfwinkelverteilung liefern. Aus dieser lässt sich dann beispielsweise der mittlere Abwurfwinkel AWW ableiten. Somit liegt im Arbeitsbetrieb laufend Information über Ist-Abwurfwinkel vor, die zur Steuerung der den Streuscheiben zugeordneten Einleitsysteme für Dünger und/oder zur Drehzahlanpassung der Streuscheiben verwendet werden kann. Nachteilig ist allerdings der große apparative Aufwand, der durch die zahlreichen Radarsensoren und Auswertesysteme entsteht.

Wünschenswert wäre eine diesbezüglich vereinfachte Konfiguration der Streubildüberwachung, die dennoch zuverlässige Information liefert, insbesondere auch unter schwankenden oder schwierigen Arbeitsbedingungen.

Dies ist jedoch insbesondere dann problematisch, wenn an den beiden Streuscheiben unterschiedliche physikalische Randbedingungen für den Abwurf des Düngers herrschen. Dies trifft im Arbeitsbetrieb häufig beim Ausbringen des Düngers auf geneigten Anbauflächen zu.

Es besteht daher der Bedarf, einen möglichst gleichmäßigen Austrag von Dünger auch bei wechselnden Hangneigungen und mit möglichst geringem technischen Überwachungsaufwand zu ermöglichen.

Die gestellte Aufgabe wird mit einem Verfahren gemäß Anspruch 1 gelöst. Demnach dient diese zur Abwurfwinkelregelung eines Schleuderstreuers, der eine erste und zweite Streuscheibe sowie diesen zugeordnete Einleitsysteme für Dünger umfasst. Ferner werden Hangneigung des Schleuderstreuers und Ist-Abwurfwinkel der ersten Streuscheibe im Arbeitsbetrieb gemessen. Aus der Hangneigung wird dann ein bezüglich der Hangneigung normierter Abwurfwinkel der ersten Streuscheibe berechnet und daraus sowie aus den Stellungen der Einleitsysteme ein bezüglich der Hangneigung normierter Abwurfwinkel der zweiten Streuscheibe berechnet. Schließlich wird aus der Hangneigung und dem normierten Abwurfwinkel der zweiten Streuscheibe deren Ist-Abwurfwinkel berechnet und an einen Soll-Abwurfwinkel angeglichen.

Dadurch können die auf den beiden Seiten des Schleuderstreuers je nach Hangneigung unterschiedlich auf die Abwurfwinkelverteilung einwirkenden Einflüsse der Schwerkraft berechnet werden. Die derart normierten Messdaten des Ist-Abwurfwinkels der ersten Streuscheibe ermöglichen eine Zuordnung der Stellparameter der ersten Streuscheibe und der zweiten Streuscheibe zu normierten Ist-Abwurfwinkeln beider Streuscheiben. Somit ist eine separate Messung des Ist-Abwurfwinkels der zweiten Streuscheibe entbehrlich. Folglich kann der Ist-Abwurfwinkel der zweiten Streuscheibe ohne separate Messung an einen Soll-Abwurfwinkel der zweiten Streuscheibe angeglichen werden.

Die Soll-Abwurfwinkel ergeben sich beispielsweise aus einer Streutabelle in Abhängigkeit von einer vorgegebenen Arbeitsbreite und verwendeten Düngersorte. Während der Ist-Abwurfwinkel der zweiten Streuscheibe mittels Normierung berechnet wird, kann der gemessene Ist-Abwurfwinkel der ersten Streuscheibe direkt in die Abwurfwinkelregelung eingehen und an den zugehörigen Soll-Abwurfwinkel anpasst werden.

Vorzugsweise werden eine erste Hangneigung in Fahrtrichtung und eine zweite Hangneigung quer zur Fahrtrichtung gemessen. Die Hangneigung in Fahrtrichtung wird auch als "pitch" bezeichnet, die Hangneigung quer zur Fahrtrichtung als "roll". Es werden somit vorzugsweise zwei orthogonal zueinander definierte Hangneigungen gemessen. Dadurch lässt sich der Ist-Abwurfwinkel der zweiten Streuscheibe besonders genau berechnen. Es wäre aber prinzipiell auch denkbar, lediglich die Hangneigung zu messen, die sich besonders stark auf Unterschiede zwischen den Streubildern der ersten und zweiten Streuscheibe auswirkt.

Vorzugsweise beziehen sich die normierten Abwurfwinkel auf eine horizontale Ebene. Dies ermöglicht eine besonders einfache Umrechnung.

Vorzugsweise ist der Ist-Abwurfwinkel der ersten Streuscheibe ein charakteristischer, insbesondere ein mittlerer Ist-Abwurfwinkel einer mittels Radarstrahlen vom Schleuderstreuer aus gemessenen Abwurfwinkelverteilung. Dies ermöglicht eine gleichermaßen einfache und zuverlässige Charakterisierung des Streubilds der ersten Streuscheibe. Insbesondere lässt sich der Ist-Abwurfwinkel dann mit in Streutabellen gebräuchlichen Soll-Abwurfwinkeln vergleichen, die beispielsweise das 50%-Perzentil der Abwurfwinkelverteilung angegeben.

Vorzugsweise wird der normierte Abwurfwinkel der zweiten Streuscheibe auf der Grundlage folgender Formel berechnet:

$$AWWn2 = AWWn1 - PE1 + PE2,$$

wobei AWWn1 und AWWn2 die normierten Abwurfwinkel der ersten beziehungsweise zweiten Streuscheibe sind, und wobei PE1 und PE2 die Winkelpositionen der Einleitsysteme an der ersten und zweiten Streuscheibe angeben.

Vorzugsweise erfolgen Umrechnungen zwischen Ist-Abwurfwinkeln und normierten Abwurfwinkeln anhand wenigstens einer Umrechnungsfunktion und/oder gespeicherten Wertetabelle für Hangneigungen. Dies ermöglicht schnelle und einfache Umrechnungen bei wechselnden Hangneigungen in Fahrtrichtung und/oder quer zur Fahrtrichtung.

Vorzugsweise geht in wenigstens einer der Umrechnungen zwischen Ist-Abwurfwinkeln und normierten Abwurfwinkeln ferner die Stellung des jeweils betroffenen Einleitsystems ein. Durch Einbeziehen der jeweiligen Ist-Stellung, insbesondere der Winkelposition, des Einleitsystems lässt sich die Umrechnung besonders exakt durchführen. Es wäre möglich, auch die radialen Positionen der Einleitsysteme in die Umrechnungen einzubeziehen.

Vorzugsweise werden die Ist-Abwurfwinkel durch Korrektur der Stellungen der Einleitsysteme an ihre Soll-Abwurfwinkel fortlaufend, also in Wiederholungsschleifen, angeglichen. Vorzugsweise wird hierbei die jeweilige Winkelposition der Einleitsysteme verstellt. Es wäre allerdings auch denkbar, die radiale Position der Einleitsysteme bezüglich der jeweiligen Drehachse der zugeordneten Streuscheibe zu variieren. Dies ermöglicht eine Regelung mit Hilfe standardisierter Parameter, die beispielsweise in herkömmlichen Wertetabellen verfügbar sind.

Vorzugsweise wird der Ist-Abwurfwinkel der ersten Streuscheibe direkt an den Soll-Abwurfwinkel angeglichen. Das heißt, die Normierung bezüglich der Hangneigung wird nicht für die Regelung an der ersten Streuscheibe angewendet. Stattdessen wird der Ist-Abwurfwinkel der ersten Streuscheibe mit einer herkömmlichen Regelschleife an den Soll-Abwurfwinkel anpasst. Das Nachregeln der Ist-Abwurfwinkel der ersten und zweiten Streuscheibe kann im Prinzip unabhängig voneinander erfolgen, da für beide Einleitsysteme sämtliche für die jeweilige Regelung erforderlichen Informationen bereitstehen. Für die zweite Streuscheibe wird lediglich zusätzlich die Normierung bezügliche der Hangneigung durchgeführt.

Die gestellte Aufgabe wird ebenso mit einem Schleuderstreuer gemäß Anspruch 10 gelöst. Demnach umfasst dieser eine erste und zweite Streuscheibe und diesen zugeordnete Einleitsysteme für Dünger. Ferner umfasst der Schleuderstreuer eine im Bereich der ersten Streuscheibe ausgebildete Überwachungseinrichtung zum Messen einer Abwurfwinkelverteilung beim Austrag des Düngers und eine Neigungsmesseinrichtung zum Messen einer Hangneigung des Schleuderstreuers. Ferner ist ein Steuerungssystem zum Steuern der Einleitsysteme, umfassend Mittel zur Ausführung des Verfahrens gemäß wenigstens einer den oben beschriebenen Ausführungsformen des Verfahrens, vorhanden. Vorzugsweise umfasst die Überwachungseinrichtung mehrere teilumfänglich um die erste Streuscheibe verteilte Radarsensoren. Derartige Radarsensoren senden beispielsweise Radarkeulen aus, deren Reflektionen von den Radarsensoren auf bekannte Weise erfasst werden. Die von den Radarsensoren erzeugten Messdaten werden in der Überwachungseinrichtung gemeinsam ausgewertet, so dass sich daraus ein insbesondere mittlerer Ist-Abwurfwinkel des Düngeraustrags berechnen lässt. Eine derartige Radarüberwachung ist besonders unempfindlich gegen Störeinflüsse und bekanntermaßen für die Überwachung bewegter Objekte, wie der weggeschleuderten Düngerkörner, geeignet.

Vorzugsweise ist die Überwachungseinrichtung zur fortlaufenden Messung einer Abwurfwinkelverteilung der ersten Streuscheibe ausgebildet. Somit kann der Ist-Abwurfwinkel der ersten Streuscheibe während des Arbeitsbetriebs in geeigneten zeitlichen Abständen wiederholt ermittelt werden, um ein Angleichen des Ist-Abwurfwinkels der zweiten Streuscheibe an den Soll-Abwurfwinkel auch bei sich ständig ändernden Hangneigungen zu ermöglichen.

Vorzugsweise ist die Neigungsmesseinrichtung zum fortlaufenden Messen einer ersten Hangneigung in Fahrtrichtung des Schleuderstreuers und einer zweiten Hangneigung quer zur Fahrtrichtung ausgebildet. Dadurch können auch komplexe Geländeverläufe zuverlässig berücksichtigt und die Soll-Abwurfwinkel im Arbeitsbetrieb eingehalten werden.

Eine bevorzugte Ausführungsform der Erfindung ist in den Zeichnungen dargestellt. Es zeigen:

Fig. 1 eine schematische Draufsicht auf einen Schleuderstreuer und zugehörigen Streubildern und charakteristischen Streuparametern; und

Fig. 2 ein Ablaufdiagramm des Verfahrens.

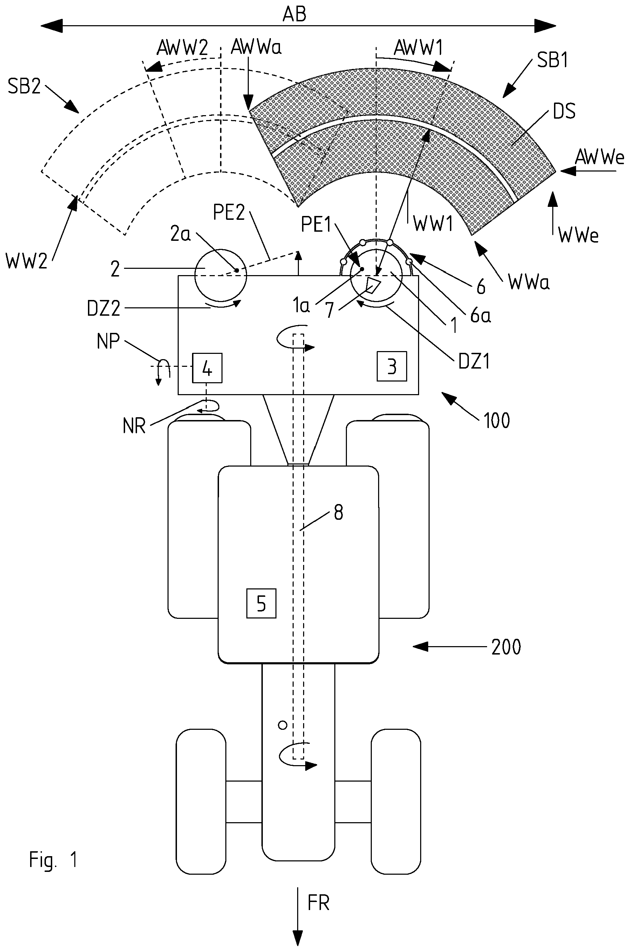

Wie die Fig. 1 erkennen lässt, umfasst der Schleuderstreuer 100 in einer bevorzugten Ausführungsform eine erste Streuscheibe 1 mit einem zugehörigen Einleitsystem 1a für Dünger sowie eine zweite Streuscheibe 2 mit einem zugehörigen Einleitsystem 2a. Die Einleitsysteme 1a, 2a umfassen herkömmliche Dosierungseinrichtungen, wobei wenigstens die Stellungen PE1, PE2 ihrer Aufgabepunkte bezüglich der Streuscheiben 1, 2 maschinell eingestellt werden können. Die Stellungen PE1, PE2 sind beispielsweise als Positionswinkel bezüglich einer beliebigen Hilfslinie in Drehrichtung der jeweiligen Streuscheibe 1, 2 definiert, gegebenenfalls ferner als radialer Abstand von der Drehachse der jeweiligen Streuscheibe 1, 2.

In der Fig. 1 sind die Einleitsysteme 1a, 2a schematisch anhand ihrer Aufgabepunkte für Dünger dargestellt. Aus Gründen der Übersichtlichkeit ist lediglich die Stellung PE2 des zweiten Einleitsystems 2a beispielhaft durch dessen Positionswinkel angedeutet. Für das Einleitsystem 1a gilt der gleiche Zusammenhang bezogen auf die Drehrichtung der ersten Streuscheibe 1.

Der Schleuderstreuer 100 umfasst ferner eine Steuereinheit 3 zur Steuerung der Streuscheiben 1, 2 und ihrer Einleitsysteme 1a, 2a. Die Steuereinheit 3 ermöglicht wenigstens eine Anpassung der Stellungen PE1, PE2 und insbesondere bei hydraulischem Antrieb der Streuscheiben 1, 2 auch eine Anpassung ihrer Drehzahlen DZ1, DZ2. Bei mechanischem Antrieb der Streuscheiben 1, 2 werden die Drehzahlen DZ1, DZ2 beispielsweise von einem Schlepper aus eingestellt.

Der Schleuderstreuer 100 umfasst ferner eine Neigungsmesseinrichtung 4 zum Messen einer ersten Hangneigung NP (pitch) in Fahrtrichtung FR und einer zweiten Hangneigung NR (roll) orthogonal zur Fahrtrichtung FR.

Die Steuereinheit 3 bildet mit einer Bedienstation 5, die lediglich beispielhaft im Bereich eines mit dem Schleuderstreuer 100 verbundenen Schleppers 200 dargestellt ist, ein Steuerungssystem. Die Bedienstation 5 kann auch am Schleuderstreuer 100 angeordnet sein. Die Bedienstation 5 dient zur Anzeige von Maschinenparametern des Schleuderstreuers 100 und zur Eingabe wenigstens einer verwendeten Düngersorte DS und einer vorzugebenden Arbeitsbreite AB für den Düngeraustrag.

Im nutzbaren Abwurfwinkelbereich der ersten Streuscheibe 1 ist eine Überwachungseinrichtung 6 zum Messen einer Abwurfwinkelverteilung im Wesentlichen quer zur Fahrtrichtung FR ausgebildet. Die Überwachungseinrichtung 6 umfasst mehrere ringförmig um die Streuscheibe 1 angeordnete Radarsensoren 6a. Diese senden beispielsweise Radarkeulen aus und detektieren die von den Düngerteilchen reflektierten Radarwellen auf bekannte Weise. Dies ist daher nicht im Detail erläutert. Es wären prinzipiell auch andere Verfahren denkbar, die die weggeschleuderten Düngerteilchen beispielsweise optisch oder elektromechanisch überwachen.

Zusätzlich ist im Bereich der ersten Streuscheibe eine optionale Überwachungseinrichtung 7 zum Messen einer Wurfweiteverteilung des Düngeraustrags schematisch angedeutet. Damit lassen sich zusätzliche Informationen über das von der Streuscheibe 1 erzeugte Streubild SB1 der verwendeten Düngersorte DS gewinnen.

Die Streuscheiben 1, 2 werden vom Schlepper 200 mittels einer Antriebskopplung 8 gegenläufig mit vorzugsweise identischen Drehzahlen DZ1, DZ2 gedreht. Die Antriebskopplung 8 kann hydraulisch sein oder mechanisch mittels angedeuteter Zapfwelle oder dergleichen.

Die Streuscheiben 1, 2 sind bezüglich der Fahrtrichtung FR achsensymmetrisch angeordnet und erzeugen auf einer horizontalen Referenzebene vorzugsweise entsprechend symmetrische Streubilder SB1, SB2. Dies ist in der Fig. 1 lediglich zur Verdeutlichung der charakteristischen Parameter schematisch angedeutet. Jedoch können die Streubilder SB1, SB2 je nach Vorgabe und/oder vorgefundener Topographie auch asymmetrisch ausgebildet sein. Für entsprechende Anpassungen der Istwerte der Abwurfwinkel AWW1, AWW2 an ihre Sollwerte sind die Einleitsysteme 1a, 2a daher unabhängig voneinander einstellbar.

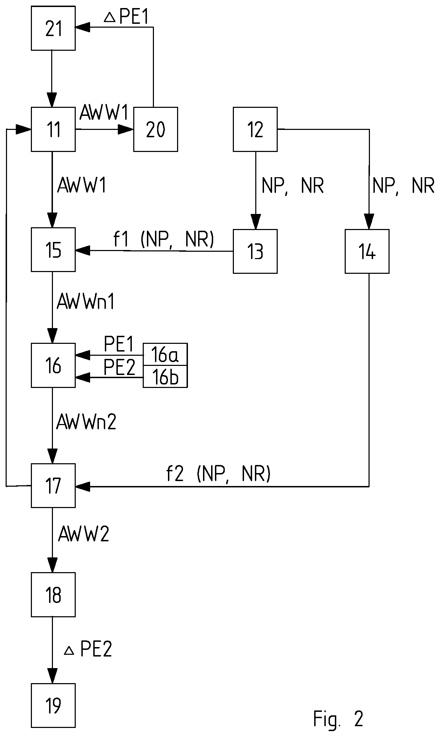

Wie die Fig. 2 hinsichtlich des Verfahrens erkennen lässt, werden der Istwert des Abwurfwinkels AWW1 der ersten Streuscheibe 1 und wenigstens eine erste oder zweite Hangneigung NP, NR in Verfahrensschritten 11, 12 während des Arbeitsbetriebs des Schleuderstreuers 100 fortlaufend gemessen und in Wiederholungsschleifen ausgewertet.

Auf der Grundlage der gemessenen Hangneigung NP, NR wird in Schritten 13, 14 der Einfluss f1(NP, NR) und f2(NP, NR) der Hangneigung NP, NR auf die Abwurfwinkel AWW1, AWW2 der ersten Streuscheibe 1 beziehungsweise der zweiten Streuscheibe 2 berechnet. Diese Umrechnungen erfolgen mit Hilfe geeigneter Umrechnungsfunktionen und/oder gespeicherter Wertetabellen. Diese geben wieder, wie sich die Streubilder SB1, SB2 und/oder die Abwurfwinkel AWW1, AWW2 bei wechselnden Hangneigungen NP, NR ändern.

Optional kann in derartigen Umrechnungsfunktionen und/oder Wertetabellen Information berücksichtigt werden, die den Einfluss der Stellungen PE1, PE2 der Einleitsysteme 1a, 2a berücksichtigen. Dadurch lässt sich die Genauigkeit der Umrechnung erhöhen.

Auf der Grundlage des im Schritt 13 berechneten Einflusses der Hangneigung NP, NR auf den Abwurfwinkel AWW1 der ersten Streuscheibe 1 wird in einem anschließenden Schritt 15 ein bezüglich der Hangneigung NR, NP normierter Abwurfwinkel AWWn1 für die erste Streuscheibe 1 berechnet.

In einem anschließenden Schritt 16 wird ein bezüglich der Hangneigung NR, NP normierter Abwurfwinkel AWWn2 für die zweite Streuscheibe 2 berechnet. Hierzu werden die Stellungen PE1, PE2 des ersten und zweiten Einleitsystems 1a, 2a in Teilschritten 16a, 16b von den Einleitsystemen 1a, 2a ausgelesen. Mit Hilfe dieser Ist-Maschinenparameter wird der normierte Abwurfwinkel AWWn2 vorzugsweise nach folgender Formel berechnet:

$$AWWn2 = AWWn1 - PE1 + PE2.$$

Die Normierung der Abwurfwinkel erfolgt hierbei vorzugsweise bezüglich einer horizontalen Referenzebene. Das heißt, aus dem mit Hangeinfluss gemessenen Abwurfwinkel AWW1 werden Abwurfwinkel AWWn1, AWWn2 ohne Hangeinfluss berechnet. Prinzipiell sind jedoch beliebige Algorithmen und Referenzmodelle zur Normierung bezüglich der Hangneigung denkbar.

Auf der Grundlage des Schritts 14 zur Berechnung des Einflusses f2(NP, NR) der Hangneigung auf den Abwurfwinkel AWW2 wird in einem anschließenden Schritt 17 der Istwert des Abwurfwinkels AWW2 für die zweite Streuscheibe 2 berechnet.

In einem daran anschließendem Schritt 18 wird dieser Istwert des Abwurfwinkels AWW2 mit einem Sollwert des Abwurfwinkels AWW2 für die zweite Streuscheibe 2 verglichen und daraus ein Korrekturwert ΔPE2 für das Einleitsystem 2a der zweiten Streuscheibe 2 berechnet.

In einem abschließenden Schritt 19 wird die Stellung PE2 des Einleitsystems 2a um den Korrekturwert ΔPE2 geändert und dadurch der berechnete Istwert des Abwurfwinkels AWW2 der zweiten Streuscheibe 2 an den zugehörigen Sollwert angeglichen. Die Regelschleife für die zweite Streuscheibe 2 wird schließlich durch erneutes Ausführen der Schritte 11 und 12 geschlossen.

Wie die Fig. 2 ferner erkennen lässt, wird in einem Schritt 20 einer parallelen Regelschleife ein Korrekturwert ΔPE1 für das Einleitsystem 1a der ersten Streuscheibe 1 ohne Normierung bezüglich der Hangneigung berechnet. Der anschließende Angleich des Istwerts an den Sollwert des Abwurfwinkels AWW1 der ersten Streuscheibe 1 im Schritt 21 erfolgt somit in einer herkömmlichen Regelschleife.

Die Sollwerte für die Abwurfwinkel AWW1, AWW2 der ersten und zweiten Streuscheibe 1, 2 lassen sich beliebig im Rahmen praktikabler Werte vorgeben, beispielsweise innerhalb eines Bereich von 15° bis 24°, und können identisch sein.

Die beschriebenen Berechnungsschritte lassen sich in einem Bordrechner des Schleuderstreuers 100 und/oder in einem Bordrechner des Schleppers 200 durchführen. Zu diesem Zweck können einzelne Systemkomponenten, wie beispielsweise die Steuereinheit 3 und die Bedienstation 5 auch drahtlos miteinander kommunizieren. Ebenso könnten Messdaten zur Hangneigung NP, NR von einer Neigungsmesseinrichtung des Schleppers 200 an die Steuereinheit 3 übermittelt werden.

Mit dem beschriebenen Verfahren und Schleuderstreuer können vorgegebene Streubilder unter wechselnden topographischen Bedingungen mit vergleichsweise geringem Aufwand eingehalten werden.

**Patentansprüche**

1. Verfahren zur Abwurfwinkelregelung eines Schleuderstreuers (100) mit einer ersten und zweiten Streuscheibe (1, 2) und zugeordneten Einleitsystemen (1a, 2a) für Dünger, wobei:

a) Hangneigung (NP, NR) des Schleuderstreuers und Istwert des Abwurfwinkels (AWW1) der ersten Streuscheibe (1) im Arbeitsbetrieb gemessen werden;

b) ein bezüglich der Hangneigung normierter Abwurfwinkel (AWWn1) der ersten Streuscheibe (1) aus der Hangneigung berechnet wird und daraus sowie aus den Stellungen (PE1, PE2) der Einleitsysteme ein bezüglich der Hangneigung normierter Abwurfwinkel (AWWn2) der zweiten Streuscheibe (2) berechnet wird; und

c) aus der Hangneigung und dem normierten Abwurfwinkel (AWWn2) der zweiten Streuscheibe (2) ein Istwert des Abwurfwinkels (AWW2) der zweiten Streuscheibe berechnet und an einen zugehörigen Sollwert angeglichen wird.

**2.** Verfahren nach Anspruch 1, wobei eine erste Hangneigung (NP) in Fahrtrichtung und eine zweite Hangneigung (NR) quer zur Fahrtrichtung (FR) gemessen werden.

**3.** Verfahren nach Anspruch 1 oder 2, wobei sich die normierten Abwurfwinkel (AWWn1, AWWn2) auf eine horizontale Referenzebene beziehen.

**4.** Verfahren nach Anspruch 3, wobei der Istwert des Abwurfwinkels (AWW1) der ersten Streuscheibe (1) ein charakteristischer, insbesondere ein mittlerer Ist-Abwurfwinkel einer mittels Radarstrahlen vom Schleuderstreuer (100) aus gemessenen Abwurfwinkelverteilung ist.

**5.** Verfahren nach einem der vorigen Ansprüche, wobei der normierte Abwurfwinkel (AWWn2) der zweiten Streuscheibe auf der Grundlage folgender Formel berechnet wird:

$$AWWn2 = AWWn1 - PE1 + PE2,$$

wobei AWWn1 der normierte Abwurfwinkel der ersten Streuscheibe ist, PE1 ein Positionswinkel des Einleitsystems (1a) der ersten Streuscheibe (1) und PE2 ein entsprechend definierter Positionswinkel des Einleitsystems (2a) der zweiten Streuscheibe (2).

**6.** Verfahren nach wenigstens einem der vorigen Ansprüche, wobei Umrechnungen zwischen Istwerten der Abwurfwinkel (AWW1, AWW2) und normierten Abwurfwinkeln (AWWn1, AWWn2) anhand wenigstens einer Umrechnungsfunktion und/oder gespeicherten Wertetabelle für Hangneigungen (NP, NR) erfolgen.

**7.** Verfahren nach Anspruch 6, wobei in wenigstens eine der Umrechnungen zwischen Istwerten der Abwurfwinkel (AWW1, AWW2) und normierten Abwurfwinkeln (AWWn1, AWWn2) ferner die Stellung (PE1, PE2) des betroffenen Einleitsystems (1a, 2a) eingeht.

**8.** Verfahren nach wenigstens einem der vorigen Ansprüche, wobei die Istwerte der Abwurfwinkel (AWW1, AWW2) durch Korrektur der Stellungen (PE1, PE2) der Einleitsysteme (1a, 2a) fortlaufend an zugehörige Sollwerte der Abwurfwinkel (AWW1, AWW2) angeglichen werden.

**9.** Verfahren nach Anspruch 8, wobei der Istwert des Abwurfwinkels (AWW1) der ersten Streuscheibe (1) ohne Normierung bezüglich der Hangneigung (NP, NR) an den Sollwert des Abwurfwinkels (AWW1) angeglichen wird.

**10.** Schleuderstreuer (100) mit einer ersten und zweiten Streuscheibe (1, 2) und zugeordneten Einleitsystemen (1a, 2a) für Dünger, und ferner umfassend:

- eine im Bereich der ersten Streuscheibe (1) ausgebildete Überwachungseinrichtung (6) zum Messen einer Abwurfwinkelverteilung beim Austrag des Düngers;
- eine Neigungsmesseinrichtung (4) zum Messen einer Hangneigung (NP, NR) des Schleuderstreuers (100); und
- ein Steuerungssystem (3, 5) zum Steuern der Einleitsysteme (1a, 2a), umfassend Mittel zur Ausführung des Verfahrens gemäß wenigstens einem der vorigen Ansprüche.

**11.** Schleuderstreuer nach Anspruch 10, wobei die Überwachungseinrichtung (6) mehrere teilumfänglich um die erste Streuscheibe (1) verteilte Radarsensoren (6a) umfasst.

**12.** Schleuderstreuer nach Anspruch 10, wobei die Überwachungseinrichtung (6) mindestens einen Radarsensor umfasst, der um die erste Streuscheibe verschwenkbar angeordnet ist.

**13.** Schleuderstreuer nach Anspruch 11 oder 12, wobei die Überwachungseinrichtung (6) zur fortlaufenden Messung einer Abwurfwinkelverteilung der ersten Streuscheibe (1) ausgebildet ist.

**14.** Schleuderstreuer nach einem der Ansprüche 10 bis 13, wobei die Neigungsmesseinrichtung (4) zum fortlaufenden Messen einer ersten Hangneigung (NP) in Fahrtrichtung (FR) des Schleuderstreuers (100) und einer zweiten Hangneigung (NR) quer zur Fahrtrichtung (FR) ausgebildet ist.

**Claims**

**1.** Method for controlling the discharge angle of a centrifugal spreader (100) having a first and a second spreader disc (1, 2) and associated delivery systems (1a, 2a) for fertilizers, wherein:

a) slope inclination (NP, NR) of the centrifugal spreader and current value of the discharge angle (AWW1) of the first spreader disc (1) are measured during operation;
b) a discharge angle (AWWn1) of the first spreader disc (1) that is normalized with respect to the slope inclination is calculated from the slope inclination and, from this and from the positions (PE1, PE2) of the delivery systems, a discharge angle (AWWn2) of the second spreader disc (2) that is normalized with respect to the slope inclination is calculated; and

c) a current value of the discharge angle (AWW2) of the second spreader disc is calculated from the slope inclination and the normalized discharge angle (AWWn2) of the second spreader disc (2) and is adjusted to an associated target value.

2. Method according to Claim 1, wherein a first slope inclination (NP) in the direction of travel and a second slope inclination (NR) transverse to the direction of travel (FR) are measured.

3. Method according to Claim 1 or 2, wherein the normalized discharge angles (AWWn1, AWWn2) refer to a horizontal reference plane.

4. Method according to Claim 3, wherein the current value of the discharge angle (AWW1) of the first spreader disc (1) is a characteristic, in particular an average, current discharge angle of a discharge angle distribution measured from the centrifugal spreader (100) by means of radar beams.

5. Method according to one of the preceding claims, wherein the normalized discharge angle (AWWn2) of the second spreader disc is calculated on the basis of the following formula:

$$AWWn2 = AWWn1 - PE1 + PE2,$$

where AWWn1 is the normalized discharge angle of the first spreader disc, PE1 is a position angle of the delivery system (1a) of the first spreader disc (1), and PE2 is a correspondingly defined position angle of the delivery system (2a) of the second spreader disc (2).

6. Method according to at least one of the preceding claims, wherein conversions between current values of the discharge angles (AWW1, AWW2) and normalized discharge angles (AWWn1, AWWn2) are carried out by using at least one conversion function and/or stored table of values for slope inclinations (NP, NR).

7. Method according to Claim 6, wherein the position (PE1, PE2) of the relevant delivery system (1a, 2a) is also incorporated in at least one of the conversions between current values of the discharge angles (AWW1, AWW2) and normalized discharge angles (AWWn1, AWWn2).

8. Method according to at least one of the preceding claims, wherein the current values of the discharge angles (AWW1, AWW2) are continuously adjusted to associated target values of the discharge angles (AWW1, AWW2) by correcting the positions (PE1, PE2) of the delivery systems (1a, 2a).

9. Method according to Claim 8, wherein the current value of the discharge angle (AWW1) of the first spreader disc (1) is adjusted to the target value of the discharge angle (AWW1) without normalization with respect to the slope inclination (NP, NR).

10. Centrifugal spreader (100) having a first and second spreader disc (1, 2) and associated delivery systems (1a, 2a) for fertilizers, and further comprising:

    - a monitoring device (6), formed in the region of the first spreader disc (1), for measuring a discharge angle distribution as the fertilizer is discharged;
    - an inclination measuring device (4) for measuring a slope inclination (NP, NR) of the centrifugal spreader (100); and
    - a control system (3, 5) for controlling the delivery systems (1a, 2a), comprising means for carrying out the method according to at least one of the preceding claims.

11. Centrifugal spreader according to Claim 10, wherein the monitoring device (6) comprises a plurality of radar sensors (6a) distributed partially circumferentially around the first spreader disc (1).

12. Centrifugal spreader according to Claim 10, wherein the monitoring device (6) comprises at least one radar sensor which is arranged such that it can be pivoted about the first spreader disc.

13. Centrifugal spreader according to Claim 11 or 12, wherein the monitoring device (6) is set up for the continuous measurement of a discharge angle distribution of the first spreader disc (1).

14. Centrifugal spreader according to one of Claims 10 to 13, wherein the inclination measuring device (4) is set up for the continuous measurement of a first slope inclination (NP) in the direction of travel (FR) of the centrifugal spreader (100) and a second slope inclination (NR) transverse to the direction of travel (FR).

**Revendications**

1. Procédé pour régler l'angle de déversement d'un épandeur d'engrais (100) comprenant un premier et un deuxième disque d'épandage (1, 2) et des systèmes d'alimentation associés (1a, 2a) pour des engrais, dans lequel :

a) on mesure l'inclinaison de la pente (NP, NR) de l'épandeur d'engrais et la valeur réelle de l'angle de déversement (AWW1) du premier disque d'épandage (1) en mode de travail ;

b) on calcule un angle de déversement normalisé (AWWn1) par rapport à l'inclinaison de la pente du premier disque d'épandage (1) à partir de l'inclinaison de la pente et l'on calcule à partir de ce résultat et à partir des positions (PE1, PE2) des systèmes d'alimentation un angle de déversement normalisé (AWWn2) par rapport à l'inclinaison de la pente du deuxième disque d'épandage (2) ; et

c) à partir de l'inclinaison de la pente et de l'angle de déversement normalisé (AWWn2) du deuxième disque d'épandage (2), on calcule une valeur réelle de l'angle de déversement (AWW2) du deuxième disque d'épandage et on compare cette valeur avec une valeur de consigne associée.

2. Procédé selon la revendication 1, dans lequel on mesure une première inclinaison de la pente (NP) dans la direction de conduite et une deuxième inclinaison de la pente (NR) transversalement à la direction de conduite (FR).

3. Procédé selon la revendication 1 ou 2, dans lequel les angles de déversement normalisés (AWWn1, AWWn2) se rapportent à un plan de référence horizontal.

4. Procédé selon la revendication 3, dans lequel la valeur réelle de l'angle de déversement (AWW1) du premier disque d'épandage (1) est un angle de déversement réel caractéristique, en particulier moyen, d'une répartition d'angles de déversement mesurée à partir de l'épandeur d'engrais (100) au moyen de faisceaux radar.

5. Procédé selon l'une quelconque des revendications précédentes, dans lequel l'angle de déversement normalisé (AWWn2) du deuxième disque d'épandage est calculé sur la base de la formule suivante :

$$AWWn2 = AWWn1 - PE1 + PE2,$$

AWWn1 étant l'angle de déversement normalisé du premier disque d'épandage, PE1 étant un angle de positionnement du système d'alimentation (1a) du premier disque d'épandage (1) et PE2 étant un angle de positionnement défini de manière correspondante du système d'alimentation (2a) du deuxième disque d'épandage (2).

6. Procédé selon au moins l'une quelconque des revendications précédentes, dans lequel des conversions entre les valeurs réelles des angles de déversement (AWW1, AWW2) et les angles de déversement normalisés (AWWn1, AWWn2) sont effectuées à l'aide d'au moins une fonction de conversion et/ou des tableaux de valeurs mémorisés pour des inclinaisons de pente (NP, NR).

7. Procédé selon la revendication 6, dans lequel, dans au moins l'une des conversions entre les valeurs réelles des angles de déversement (AWW1, AWW2) et les angles de déversement normalisés (AWWn1, AWWn2), on fait intervenir en outre la position (PE1, PE2) du système d'alimentation concerné (1a, 2a).

8. Procédé selon au moins l'une quelconque des revendications précédentes, dans lequel les valeurs réelles des angles de déversement (AWW1, AWW2), par correction des positions (PE1, PE2) des systèmes d'alimentation (1a, 2a), sont ajustées en continu à des valeurs de consigne associées des angles de déversement (AWW1, AWW2).

9. Procédé selon la revendication 8, dans lequel la valeur réelle de l'angle de déversement (AWW1) du premier disque d'épandage (1) est ajustée sans normalisation par rapport à l'inclinaison de la pente (NP, NR) à la valeur de consigne de l'angle de déversement (AWW1).

10. Épandeur d'engrais (100) comprenant un premier et un deuxième disque d'épandage (1, 2) et des systèmes d'alimentation associés (1a, 2a) pour de l'engrais, comprenant en outre :

   - un dispositif de surveillance (6) réalisé dans la région du premier disque d'épandage (1) pour mesurer une répartition d'angles de déversement lors du déversement de l'engrais ;
   - un dispositif de mesure d'inclinaison (4) pour mesurer une inclinaison de la pente (NP, NR) de l'épandeur d'engrais (100) ; et
   - un système de commande (3, 5) pour commander les systèmes d'alimentation (1a, 2a), comprenant des moyens pour mettre en oeuvre le procédé selon au moins l'une quelconque des revendications précédentes.

11. Épandeur d'engrais selon la revendication 10, dans lequel le dispositif de surveillance (6) comprend plusieurs capteurs radar (6a) répartis sur une partie de la périphérie autour du premier disque d'épandage (1).

12. Épandeur d'engrais selon la revendication 10, dans lequel le dispositif de surveillance (6) comprend au moins un capteur radar qui est disposé de manière à pouvoir pivoter autour du premier disque d'épandage.

13. Épandeur d'engrais selon la revendication 11 ou 12, dans lequel le dispositif de surveillance (6) est réalisé de manière à mesurer en continu une répartition des angles de déversement du premier disque d'épandage (1).

14. Épandeur d'engrais selon l'une quelconque des revendications 10 à 13, dans lequel le dispositif de mesure d'inclinaison (4) est réalisé de manière à mesurer en continu une première inclinaison de la pente (NP) dans la direction de conduite (FR) de l'épandeur d'engrais (100) et une deuxième inclinaison de la pente (NR) transversalement à la direction de conduite (FR).

Fig. 1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19723359 A1
- DE 102012111144 A1
- EP 1068784 A1
- EP 2783560 A2